# EUROPEAN PATENT APPLICATION

(11) **EP 1 679 704 A1**
(43) Date of publication of application: **12.07.2006**
(21) Application number: 05300013.9
(22) Date of filing: 10.01.2005
(51) Int. Cl.: G11B 19/12, G11B 27/10

(54) **Method and device for scanning the contents of a storage medium**

(71) Applicant: Thomson Licensing, 92100 Boulogne-Billancourt (FR)
(72) Inventor: Tan, Beng Eng, 600240 Singapore (SG); Lee, Guan Swee, 529236 Singapore (SG); Tan, Su Mei, 649925 Singapore (SG); Auyong, Boon Eng, 640212 Singapore (SG); Ong, Wei Khar, 120709 Singapore (SG); Low, Kok Seng, 151057 Singapore (SG)
(74) Representative: Rittner, Karsten

(57) **Abstract**

Playback devices often display a menu listing of the files contained on a data carrier like CD-ROM or flash memory medium. To obtain this information, the device usually scans through the whole medium. An improved method for scanning the contents of a storage medium comprises the steps of determining at least the type of medium and type of file system on the medium, retrieving from said storage medium structural information indicating the structure and/or type of data items stored on the medium, determining the amount of buffer space available for buffering the retrieved information, combining the retrieved and the determined values using predefined rules to determine a scanning type value, selecting, depending on the determined scanning type value, one of a plurality of scanning methods for scanning the storage medium, wherein at least a first scanning method comprises scanning only a part of the storage medium, and scanning the storage medium according to the selected scanning method.

## Description

### Field of the invention

This invention relates to a method and a device for scanning the contents of a storage medium.

### Background

When a data carrier like CD-ROM or flash memory medium containing e.g. MP3, JPEG or other files is inserted into a playback device, the device often has to obtain structural information about the data carrier, e.g. for displaying a menu listing the files. For this purpose, the device scans through the medium, or rather the mediums content index or table of contents (TOC). For CD-ROM the expected maximum number of files is 8000, however the user interface may only show a few files at a time, usually about 10. For this scanning, two methods described in the following are known.

The first known method is "Immediate scanning": Files (i.e. TOC entries) are scanned only if necessary, i.e. when the user selects the respective sub menu or navigates inside this sub menu. The scanning result is immediately used. The major drawback of this method is the slow response during page change.

The second known method is "Pre-scanning". The file system or TOC is scanned and memorized directly after insertion of the medium, e.g. optical disk or memory card. The drawback is that a large memory space is needed if the number of files is high, particularly when taking into account that in future the increasing capacity of e.g. DVD-ROM or flash memory will increase the maximum possible number of files. Scanning time will be long in case of huge data sets, thus the user will need to wait pretty long after insertion of a removable storage medium, before being able to see and/or access the menu listing of the files.

Currently, the second method is used in most applications that support e.g. CD-ROM or memory card, whose size is normally less than 256 Megabytes (MB).

In view of the drawbacks of the known methods as well as to cater for the constantly increasing media capacity, and thus longer content indices, new concepts to the existing scanning scheme are required.

### Summary of the Invention

It is an objective of the present invention to reduce the time that is required to obtain relevant structural information from a storage medium, in particular relevant content index information, e.g. the time from a request until a menu listing of files and/or directories stored on a storage medium can be displayed on a user interface (UI).

In principle, the present invention comprises detecting the medium type, and dynamically deciding whether to use a first or a second media-scanning algorithm, based on information obtained during the medium detection and player resource information. This information may particularly include number of files and/or directories on current directory level and available buffering space or display capacity respectively, but also total number of files and/or directories on the medium, type of file system on the medium, total medium capacity, used medium capacity, and others. A scanning method selector decides which scanning method should be used.

Further, one aspect of the invention is the usage of a partial scanning method. This method incorporates scanning only a part of the structural information on the medium upon the insertion of the medium into a device, and not to scan the entire file system or TOC on the medium initially. The method includes usage of a controller that decides how much file information to scan at an initial first pass, and when to perform re-scanning for one or more further scanning passes.

In particular, the inventive method for scanning a storage medium comprises the steps of receiving a request for structural information regarding said storage medium, such as a content index, determining at least the type of medium and type of file system on the medium, retrieving from said storage medium structural information indicating the structure and/or type of data items stored on the medium, such as files and/or directories, determining the amount of buffer space that is available for buffering the retrieved information, combining the retrieved and the determined values to determine a scanning type value, selecting, depending on the determined scanning type value, one of a plurality of scanning methods for scanning the storage medium or content index of said storage medium, wherein at least a first scanning method comprises scanning only a part of the storage medium or content index of said medium, and scanning the storage medium or content index of said medium according to the selected scanning method, wherein structural information is retrieved. The determination of the scanning type value may be based on predefined (or dynamically defined) rules. Further, upon selection of the first scanning method the scanning may be automatically stopped when structural information for a defined maximum number of data items is retrieved.

A device that utilizes the method is disclosed in claim 10.

According to the invention, a device for scanning the contents or content index of a storage medium comprises means for receiving a request for structural information regarding said storage medium, e.g. user interface controller or interface to another processor, means for determining at least the type of medium and type of file system on the medium, means for retrieving from said storage medium structural information indicating the structure and/or type of data items stored on the medium, e.g. drive with pick-up means, means for determining the amount of buffer space that is available for buffering the retrieved information, e.g. processor, means for combining the retrieved and the determined values to determine a scanning type value, means for selecting, depending on the determined scanning type value, one of a plurality of scanning methods for scanning the storage medium or its content index, and means for scanning the storage medium or its content index according to the selected scanning method, wherein structural information is retrieved. Said determining of the scanning type value may be based on predefined or dynamically defined rules.

According to one aspect of the invention, at least a first scanning method comprises scanning only a part of the storage medium or its content index.

Further, means may be included for automatically stopping the scanning when said first scanning method is selected and structural information for a defined maximum number of data items is retrieved. Moreover, means for dynamically defining said rules may be included, e.g. fuzzy processor.

In one embodiment, the method according to the invention further comprises the step of buffering the retrieved data, wherein the retrieved data are compressed before buffering and decompressed after retrieval from the buffer.

In one embodiment, the defined maximum number of data items to be retrieved from the medium is determined by the maximum number of simultaneously displayable menu items on a user interface, which displays a menu portion using at least a part of the retrieved structural data as menu item data.

In one embodiment, scanning the storage medium for structural data is continued in the background of another application, wherein as much menu item data are retrieved as can immediately be buffered.

In one embodiment, said structural information comprises one or more of: total medium capacity, used and/or unused medium capacity, number of files and/or directories at least on a current hierarchical level, data types of at least a part of said files, track information associated with said files.

In one embodiment, said retrieved and determined values are transformed to fuzzy parameters, and for combining the retrieved and the determined values predefined rules are used for determining a scanning type value based on fuzzy logic procedures.

In one embodiment, the buffer used for buffering the retrieved data portion is divided into buffer partitions or subbuffers. The partial scanning method further comprises the steps of receiving from an application a request for more structural information, retrieving upon said request further structural data from the storage medium, wherein the amount of structural information is the amount of data that can be buffered in one of said subbuffers, overwriting the buffered data in a defined subbuffer with the further structural data while leaving the other subbuffers unchanged, and updating the application that uses the buffered data.

In one embodiment, the following steps are performed after the scanning is automatically stopped: detecting, based on the currently used structural information, which structural information is possible or probable to be used next, retrieving from the storage medium said detected structural information to be possible or probable to be used next, buffering the retrieved information, and selecting upon the next request structural information from said buffered information.

In one embodiment, simultaneous playback mode may be selected for one or more particular data types. Upon such selection of the simultaneous playback mode, the retrieving of structural data or track information for any of that particular data types has priority over retrieving of track information of other data types.

The invention is applicable e.g. to playback devices, or any devices that may retrieve structural information from a storage medium and utilize this information for any further processing. The invention is particularly advantageous if only a fraction of this information per time is used for further processing, e.g. when an electronic display may list only a limited amount of content items at a time, or when buffering space is not sufficient for retrieving all structural information from the medium at once.

Advantageously, the disclosed media-scanning scheme is self-adaptive to various real-time conditions, such as the media capacity, format, currently available buffer space etc. This scheme is applicable for, but not limited to, scanning of e.g. optical discs, USB memory cards or thumb-drives. It can be employed in applications that require the buffering of files and/or directories; it can also be customized for use in applications that require buffering of information retrieved from a removable storage medium.

Advantageous embodiments of the invention are disclosed in the dependent claims, the following description and the figures.

### Brief description of the drawings

Exemplary embodiments of the invention are described with reference to the accompanying drawings, which show in
Fig.1 an overall diagram of the media-scanning method; and
Fig.2 a fuzzy logic controller to decide when to perform re-scan.

### Detailed description of the invention

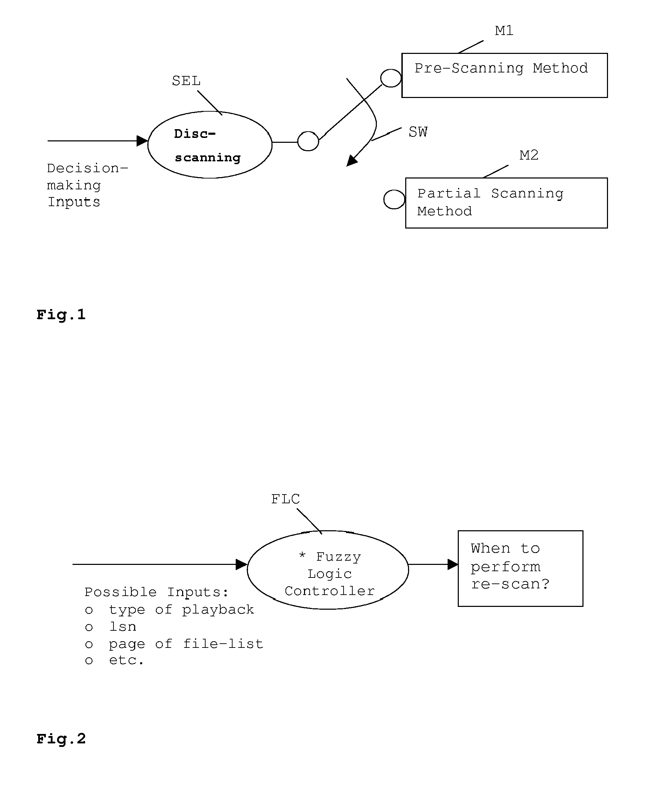

Fig.1 shows an overall diagram of the media-scanning scheme according to the invention.

When structural information about a storage medium is required, e.g. when an optical disc or a memory card is inserted into a playback device or when a menu display is activated, the medium or its content index area, usually a table of contents (TOC), and an indication area is scanned through in order to obtain this information. The structural information comprises usually at least medium type and/or file system type, number of files and/or directories on a top level or on any specified current level, but may also include one or more of total medium capacity, used and/or unused medium capacity, file type, file size, creation date, access date, length of file name or directory name, attached metadata or track information and others.

The invention is based on the recognition of the fact that for different media, depending on their respective usage or occupation as indicated by their structural information, it may be more advantageous to use either one or another scanning algorithm. In particular, the invention comprises obtaining the mentioned structural information from a storage medium, and using that structural information and device specific information as decision-making inputs for dynamically deciding whether to use a first or a second scanning algorithm. A scanning method selector SEL decides which scanning method should be used, and indicates whether a first M1 or a second M2 scanning method shall be used, or initiates the respective selected scanning algorithm. It may physically or logically switch SW between the available scanning methods M1,M2. In principle, there may also be more than two scanning methods available. One of them may be defined to be the default method.

Further, one aspect of the invention is that a partial scanning method may be used. This method does not scan the entire file system of the medium (i.e. its content index) initially, e.g. upon insertion of the medium or upon request for displaying a menu or for generating an index. Instead, this method makes use of a controller to decide how much file information to scan at a first pass, and when to perform re-scanning after the initial scanning pass. It can be implemented using e.g. a microprocessor or the like.

Main advantages of the medium-scanning scheme according to the invention are the following:
First, it uses only little memory. Thus, it is capable of handling huge data sets with only little memory resources. Second, it is quick. For lower-capacity media, its response time is in general relatively close to that of the conventional pre-scanning method. For high-capacity media that contain many files however it is quicker. Therefore, the initial time taken for the player to be ready for selection of a menu title e.g. after insertion of a rather occupied high-capacity medium, is considerably less than that of the conventional pre-scanning method.

The overview diagram in Fig.1 shows a medium-scanning method selector SEL, which controls with a switch SW which of the two (or more) scanning methods is used. The method selector is described in the following.

Upon the insertion/connection of a storage medium to a playback device, the medium type is detected and structural information is obtained from the medium, as mentioned above. The selector SEL may be a relatively simple fuzzy logic controller, which makes use of the possible decision-making inputs, i.e. the mentioned information obtained from the medium and device information, e.g. buffer size available in the playback device, number of displayable lines etc. The selector SEL uses a set of pre-defined rules to determine which of the available medium-scanning methods will be used, in this example pre-scanning method M1 or partial scanning method M2. In one embodiment however, the rules may be dynamically adapted to a current situation, e.g. player capabilities. The selected method will then be used, activated by a kind of logical switch SW. In other embodiments of the invention however the choice may be between more than two medium-scanning methods. For the reasons mentioned above it is particularly advantageous if at least one of the available methods is the mentioned partial scanning method. It is also possible to select between various versions or types of partial scanning methods, e.g. the types listed below.

The rules to determine the most suitable scanning scheme may depend on a few factors that indicate (a) the amount of resources that is needed for the retrieved data, e.g. the memory space required to store the medium information, and (b) in generalized form, the speed at which the information can be retrieved from the medium. Typically, if a medium has a large total capacity and a large used capacity, this indicates that the medium scanning process will be slow and may require a lot of memory. In this case, the partial-scanning method according to the invention will be more efficient, compared to the pre-scanning method. This can be expressed as a rule, like in the following example:

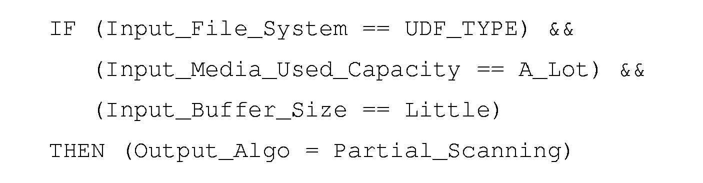

In this example, the parameters "A_Lot" for the used medium capacity and "Little" for the input buffer size are fuzzy parameters. The used capacity being "A_Lot" may indicate that the medium is not full but a considerable amount of the total capacity of the medium is used, e.g. more than 75% but less than 90%. To obtain these fuzzy parameters, it is possible to combine the read/measured parameters, e.g. read/measure the total medium capacity, read/measure the buffer size and decide whether the buffer size relative to the total medium capacity is "Little" or other, e.g. "Very little", "Medium" or "Large". For the decision e.g. a table can be used indicating limits for the classification. With sufficient rules that describe the scenarios closely, the player will be able to determine the most suitable medium-scanning scheme to be used for different types of loaded media.

It is however possible in a simpler implementation to use fixed parameters that are suitable for the available resources, e.g.

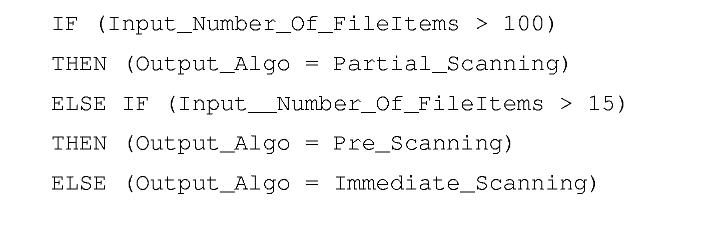

One function that many players support is simultaneous playback (SPB), meaning that a user may e.g. watch a picture slideshow while listening to audio. Thus, the player needs to present both, audio and picture or video data simultaneously. To support SPB of e.g. MP3 and JPEG files, the respective file type, here MP3 or JPEG, must already be detected. If the user tries to select SPB, the player should at least an MP3 file and a JPEG file have already been detected, in order to allow SPB to be detected. Another option is to start scanning immediately for an MP3 file or a JPEG file when the user selects SPB or enables the SPB function.

If the medium has a large capacity and is rather full, it is usually advantageous to use the partial scanning method. However, if the disc contains only a few MP3 or JPEG files and a lot of non-multimedia files, there might still be some delay between consecutive MP3s or JPEGs during playback, due to the fact that it will take much longer to scan for the next MP3 or JPEG to play than if there were less files on the medium. But the delay will in almost all cases be shorter than with known scanning methods.

Generally, a scanning method according to the invention comprises a first scanning algorithm being e.g. a partial scanning algorithm, a different second scanning algorithm and re-scan controlling. In the following, the partial scanning method is described in more detail. Various types of the partial scanning methods may be used.

In a first type of partial scanning algorithm, a device scans the content index for the entire medium and stores as much information as the buffers in the device can store, i.e. the device scans the medium's content index until its buffers are full. Subsequently, the device continues to scan the rest of the content index in order to determine the number of folders/directories and/or files that the medium contains. The device buffers the number of directories and/or files that the medium contains, and inputs this information to the fuzzy logic controller to determine when re-scanning should be done.

In a second type of partial scanning algorithm, the device initially partitions its allocated memory into several buffers, instead of having just one buffer. Upon insertion of the medium, it scans and stores as much information as all the buffers can store. It stops scanning once the buffers are filled up. Re-scanning is performed whenever necessary. When more information is required, e.g. when the user navigates through the menu and more information is needed, not the total buffer needs to be re-filled, but only one or two. Thus, re-scanning can be short and quick.

In a third type of partial scanning algorithm, the device retrieves during initial scanning of the medium's content index only sufficient information for the next processing step, e.g. for a UI to display. If the UI may display only twenty titles simultaneously, then only twenty titles are initially scanned. It may however scan more titles to be prepared for the case that more data are needed, e.g. when the user scrolls up or down in the menu. During playback, or while the menu is displayed or the user navigates through the menu, scanning of the information of the files and/or directories continues in the background. This means that when during playback of e.g. an MP3 audio file the audio data buffers are sufficiently filled with MP3 data and the pick-up is idle for a moment, then the pick-up may continue e.g. to scan the TOC until the menu buffers are full, or until the next ten files/directories are scanned. Background scanning of files/directories should always have the lowest priority, since it should in no way affect the current playback.

In the following, the procedure of dynamically selecting one of the available scanning algorithms is described, as executed by the select block SEL in Fig.1. In order to achieve the design objectives stated above, namely mainly the capability to handle large amounts of data and a quick response time, the third partial scanning method is selected to implement the partial scanning method, and further the track information is compressed before being buffered.

Upon insertion of the medium, the software initiates that it is scanned for sufficient information for the UI to display. When the pick-up or drive is idle, e.g. when no title is selected or when during playback the buffers are full, the background scanning of the information of the files and/or directories starts. The track information of MP3 tracks should always be given higher buffering priority than that of other files, because during playback of MP3 tracks the audio transition should be smooth, i.e. the audio buffers should never run empty. Hence, sufficient information of the MP3 tracks is needed. Furthermore, JPEG decoding may be done in the background since it is not as crucial for track information of JPEG pictures to be stored, compared to that of the MP3 tracks.

One aspect of the invention is the compression of the track information relating to data files. Track information may comprise e.g. title, author, start/end address etc. The track information is retrieved from the medium, compressed before buffering and decompressed after buffering. This compression will enable the information of more files and/or directories to be stored, which reduces the frequency of re-scanning as well. Any known compression algorithm can be used for this purpose. Decompression can be done when the stored information is required.

On top of this, further optimisation of buffer usage is possible by storing only the start address of the track information instead of the track information itself. Information on files and/or directories can in some cases be read from a lookup table on the medium, if available. This helps to decide if disc scanning is necessary or if the lookup table contains sufficient information for efficient information retrieval.

Generally, an implementation of a partial scanning method according to the invention comprises a partial scanning algorithm execution unit, e.g. processor, and a re-scan controller. The re-scan controller will be discussed below.

In this example, the controller for the re-scanning of the files is modelled according to the third partial scanning method described above. The controller is only activated if the size of the allocated buffer is not sufficient for the determined/calculated maximum number of files. The main tasks of the fuzzy logic based re-scan controller are the following:
It sets values for variables (e.g. buffer_low_limit) and formulates the rules to choose the most suitable scanning scheme when the medium, e.g. ODD or USB memory, is loaded into the player or connected to the player. The values may be obtained based on experimental results and then stored. In partial scanning, the controller takes into account the playback mode (e.g. MP3/ JPEG/ SPB/ Idle mode) and playback options (Standard/ Random/ Repeat...) as inputs to decide if background buffering of medium-information can be carried out.

Regarding the question when to perform re-scan, there is no need to perform re-scan for the conventional pre-scanning method; however, re-scan is required for any of the partial scanning methods, if not all the required information in the medium has been detected in the first time scanning.

To give an application example, a user interface of an audio CD player with integrated memory card reader may list seven lines of text. When a user inserts a CD-ROM with MP3 audio data into the CD drive, the player starts the drive and detects that it is a CD-ROM that has been inserted, and that it is formatted in a particular file system, e.g. Universal Disc Format (UDF). Further, the player reads the data structure on the top-level directory, finding that there are e.g. three directories and ten files on this level. It calculates the number of data items on this level being thirteen, and compares it with the number of data items it can buffer simultaneously. Assuming that this number is fifteen, it buffers the data relating to the thirteen data items immediately. If there were e.g. five directories and fifty files on the current level, the decision would be for partial scanning.

In the example, the UI uses data for the first seven data items to generate a display text. When the user scrolls up or down in the menu, remaining at the current directory level, the display is updated with the buffered data. When the user selects one of the subdirectories, the player re-scans the CD, or its TOC respectively, to successively determine the files and directories on the selected subdirectory level, while comparing the number of already detected files with the number of items it can buffer. It may also take into account the length of the text to be displayed, e.g. if it is one or two display lines.

When it has found substantially more MP3 formatted files on that level, a controller as described above determines that no further scanning is useful since the related data cannot be simultaneously buffered nor displayed, and switches to a partial scanning method. As a result, the CD is not further scanned latest when the buffer is full, the current pick-up position is stored to continue scanning later, and the buffered data are sent to the UI for generating the display text. E.g. the text for songs #1-7 are displayed, and data for songs #1-15 are buffered. As described above, in one embodiment of the invention the data from the disc are compressed before buffering and must be decompressed after buffering.

While the user scrolls down the menu in the current directory level and e.g. data for songs #7-13 are displayed, the player detects that the user may continue scrolling up or down, and determines that immediately after the next scrolling step the data for e.g. the songs #1-4 will not be used, and instead data for the songs #14-17 may be used. Thus, while the user reads the display or listens to one of the displayed songs, the player continues to scan the disc in the background, starting at the stored position to retrieve data for these songs. These data are buffered and may replace the data of the songs #1-4. Analogously, when the user scrolls up in the menu and approaches the first buffered title, the controller initiates re-scanning to get the data for the files that may soon be used. Therefore the data that are required for the next step are always available, without having to scan through the whole content index of the medium.

In a more advanced embodiment, the controller may also analyse which next steps are possible for the user, and retrieve data for a plurality of possible next steps, or all possible next steps. E.g. if the user may alternatively scroll down the menu or select a subdirectory, the controller retrieves data for both options in advance.

In one embodiment of the present invention, the following information is input to the re-scan controller to decide when re-scan should be performed, which works e.g. based on fuzzy logic:
- type of playback
- currently playing Logical Sector Number (LSN)
- end LSN of currently playing file
- current buffer levels
- page of file-list
- currently selected item number on file-list
- page on file-list
- current mode (File-list/Playback/...)

In one embodiment, the following rules are used to determine when re-scan should be performed. Generally, re-scanning of disc information happens when the required structural medium information is not already loaded in the buffer. A few more scenarios exist where re-scanning can occur, e.g. when the current mode is "File-list" with MP3 playback or JPEG picture preview, or when the current mode is "Playback".

For these scenarios, the pick-up manager will be quite busy with retrieving data for playback, and there is little opportunity to carry out re-scanning. The user might however scroll the file-list or try to skip pictures using special keys (e.g. FWD or forward key) while MP3/JPEG is playing, so that re-scanning for displaying the file-list will be necessary. For this situation, the fuzzy logic controller FLC shown in Fig.2 uses the MP3/JPEG buffer level as an input. The idea is that when the MP3 buffer level is above a safe limit, then the pick-up manager will have time to carry out re-scanning. When the MP3 buffer level drops to a "warning" limit, the fuzzy logic controller FLC directs the pick-up manager to fill the MP3 buffer to a sufficiently safe amount. However, if the user attempts to switch to other folders during MP3 playback, there might be some delay before the contents of the folder will be displayed due to the scanning process during MP3 playback. When using the inventive method for SPB, the buffer for MP3/JPEG must be large enough, in order to prevent that there will be for a short time no audio or no new JPEG displayed because of re-scanning. A safe buffer limit, being high enough to ensure sufficient time for the pickup manager to switch from one task to the other, may be found by testing.

This rule can be formulated like the simple example below:

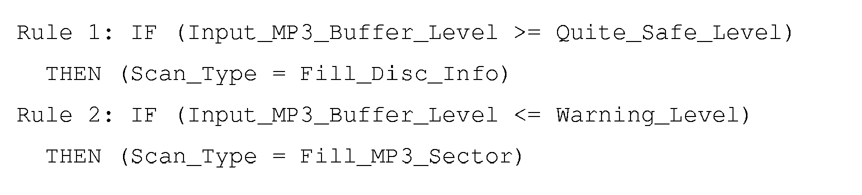

In principle, the invention can be used when a device accesses any storage medium, e.g. a built-in hard disk.

The invention can also be used in cases where the structural information is passed to another, following processing step or unit, and for any reason can be delivered faster by a pick-up than it will be processed by the other processing unit. When the scan selector detects that no more data can be processed, or receives a respective indication signal, it may switch to the partial scanning method so that the scanning can be interrupted and later resumed, preferably at the current position that is stored for this purpose. In this case, there is first the conventional pre-scanning algorithm selected, and upon detecting that the data cannot be processed fast enough, the partial scanning algorithm is selected automatically. The pick-up position may be stored in that moment, and retrieved when partial scanning continues.

## Claims

1. A method for scanning a storage medium, comprising the steps of
- receiving a request for structural information regarding data stored on said storage medium;
- determining at least the type of medium and type of file system on the medium;
- retrieving from said storage medium structural information indicating the structure and/or type of at least a portion of the data items stored on the medium;
- determining the amount of buffer space that is available for buffering the retrieved information;
- determining a scanning type value, wherein the retrieved and the determined information are utilized in combination;
- selecting, depending on the determined scanning type value, one of a plurality of scanning methods for scanning the storage medium, wherein at least a first scanning method comprises scanning only a part of the storage medium; and
- scanning the storage medium according to the selected scanning method, wherein structural information is retrieved, and wherein upon selection of the first scanning method the scanning is automatically stopped when structural information for a defined maximum number of data items is retrieved.

2. Method according to claim 1, further comprising the step of buffering the retrieved data, wherein the retrieved data are compressed before buffering and decompressed after retrieval from the buffer.

3. Method according to claim 1 or 2, wherein the defined maximum number of data items to be retrieved from the medium is determined by the maximum number of simultaneously displayable menu items on a user interface, further comprising the step of displaying on said user interface a menu portion using at least a part of the retrieved structural data as menu item data.

4. Method according to claim 2 or 3, wherein scanning the storage medium for structural data is continued in the background of another application, and wherein as much menu item data are retrieved as can immediately be buffered.

5. Method according to any of the preceding claims, wherein said structural information comprises one or more of total medium capacity, used and/or unused medium capacity, number of files and/or directories at least on a current hierarchical level, data types of at least a part of said files, track information associated with said files.

6. Method according to any of the preceding claims, wherein said retrieved and determined values are transformed to fuzzy parameters, and wherein said combining the retrieved and the determined values uses predefined rules for determining a scanning type value and is based on fuzzy logic procedures.

7. Method according to any of the preceding claims, wherein the buffer used for buffering the retrieved data portion is divided into buffer partitions or subbuffers, and wherein the first scanning method comprises the further steps of
- receiving from an application a request for more structural information;
- retrieving upon said request further structural data from the storage medium, wherein the amount of structural information is the amount of data that can be buffered in one of said subbuffers;
- overwriting the buffered data in a defined subbuffer with the further structural data while leaving the other subbuffers unchanged; and
- updating the application that uses the buffered data.

8. Method according to any of the claims 1-6, wherein after the scanning is automatically stopped the following steps are performed:
- detecting, based on the currently used structural information, which structural information is possible or probable to be used next;
- retrieving from the storage medium said detected structural information to be possible or probable to be used next;
- buffering the retrieved information; and
- selecting upon the next request structural information from said buffered information.

9. Method according to any of the preceding claims, wherein simultaneous playback mode may be selected for one or more particular data types, and wherein upon selection of simultaneous playback mode the retrieving of structural data being track information for any of that particular data types has priority over retrieving of track information of other data types.

10. Device for scanning the contents of a storage medium, using a method disclosed in any of the claims 1-9.
